(19) Europäisches Patentamt
European Patent Office
Office européen des brevets

(11) **EP 3 760 679 A1**

(12) # EUROPEAN PATENT APPLICATION
published in accordance with Art. 153(4) EPC

(43) Date of publication:
06.01.2021 Bulletin 2021/01

(21) Application number: 19761710.3

(22) Date of filing: 27.02.2019

(51) Int Cl.:
*C09D 11/30* (2014.01)          *B41J 2/01* (2006.01)
*B41M 5/00* (2006.01)

(86) International application number:
**PCT/JP2019/007419**

(87) International publication number:
**WO 2019/167976 (06.09.2019 Gazette 2019/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  28.02.2018  JP 2018034901
28.03.2018  JP 2018061216

(71) Applicant: OSAKA SODA CO., LTD.
Osaka-shi, Osaka 550-0011 (JP)

(72) Inventors:
• **UMAKOSHI, Hideaki**
Osaka-shi, Osaka 550-0011 (JP)
• **UENISHI, Akiho**
Osaka-shi, Osaka 550-0011 (JP)
• **IWASA, Naruhito**
Osaka-shi, Osaka 550-0011 (JP)
• **SAKURAI, Tetsuo**
Osaka-shi, Osaka 550-0011 (JP)

(74) Representative: **Müller-Boré & Partner**
**Patentanwälte PartG mbB**
**Friedenheimer Brücke 21**
**80639 München (DE)**

(54)  **ACTINIC RAY CURABLE INKJET INK COMPOSITION**

(57)    An object of the present invention is to provide an active energy ray-curable inkjet ink composition that has a low viscosity such that the composition can be ejected as an inkjet ink, and can exhibit sufficient adhesion to a plastic substrate having low surface free energy. The present invention provides an active energy ray-curable inkjet ink composition comprising a polyester resin (A), wherein the polyester resin (A) contains a structural unit (a-1) derived from a polybasic acid and a structural unit (a-2) derived from a polyhydric alcohol, the structural unit (a-2) derived from a polyhydric alcohol contains 20 mol% or more and 100 mol% or less of a structural unit derived from hydrogenated bisphenol A, and the polyester resin (A) has a number average molecular weight (Mn) of 500 to 4,500 and an acid value of 5 to 300.

EP 3 760 679 A1

## Description

Technical Field

The present invention relates to an active energy ray-curable inkjet ink composition and a print obtained by curing the composition.

Background Art

Active energy ray- or UV-curable inkjet inks are broadly classified into the radical-curable type and the ion-(anion or cation) curable type, according to the curing system. The radically curable type, which has the advantage of including various options of compositions to adjust the drying rate or the physical properties of coating films, are widely used.

The composition of an active energy ray-curable inkjet ink may include a UV-curable monomer, a UV-curable oligomer, a UV-curable polymer, a polymerization initiator, a colorant, and various additives. An inkjet ink may not contain a polymer component due to limitations on viscosity. The polymer component may be an inert polymer that is not UV-curable.

Substrates to which an active energy ray-curable inkjet ink is applied include paper, plastics, metals, and inorganic substances (such as glass). Among them, plastics are available in various types, such as soft and hard; in particular, in the case of plastic substrates such as polyethylene and polypropylene having low surface free energy, the adhesion can be often poor, which may cause the trouble of coating film peeling.

One method for solving the poor adhesion to substrates with low surface free energy is to add a specific functional resin. Patent Literature 1, for example, is intended to solve this by adding a polymer. However, as is clear from the fact that the composition containing this resin is intended for use as a lithographic offset printing ink, the composition has a relatively high viscosity (several to several hundreds Pa·s) and thus, is not applicable as a low-viscosity ink (20 mPa·s or less), such as an inkjet ink.

Patent Literature 2 has reported the adhesion of a low-viscosity inkjet ink composition to a polyethylene terephthalate (PET) substrate. However, the substrate is limited to PET, and the composition is not versatile enough to achieve adhesion to a wide range of substrates including substrates with low surface free energy.

Citation List

Patent Literature 1: Japanese Patent No. 5540862
Patent Literature 2: JP 2017-19989 A

Summary of Invention

Technical Problem

It is an object of the present invention to provide an active energy ray-curable inkjet ink composition that has a low viscosity such that the composition can be ejected as an inkjet ink, and can exhibit sufficient adhesion to a plastic substrate having low surface free energy.

Solution to Problem

As a result of their extensive research, the present inventors have found that as a solution to the aforementioned problem, an active energy ray-curable ink composition containing a polyester resin having a specific structure achieves excellent adhesion to a plastic substrate while maintaining a low viscosity.

The present invention can be summarized as follows:
Through the use of an active energy ray-curable inkjet ink composition comprising a polyester resin (A), wherein the polyester resin (A) contains a structural unit (a-1) derived from a polybasic acid and a structural unit (a-2) derived from a polyhydric alcohol, the structural unit (a-2) derived from a polyhydric alcohol contains 20 mol% or more and 100 mol% or less of a structural unit derived from hydrogenated bisphenol A, and the polyester resin (A) has a number average molecular weight (Mn) of 500 to 4,500 and an acid value of 5 to 300, it is possible to obtain a composition having sufficient adhesion to a plastic substrate with low surface free energy (for example, a substrate formed of polypropylene, polyethylene terephthalate, or the like) while maintaining a low viscosity required for inkjet, thus completing the present invention.

Advantageous Effects of Invention

A print obtained by printing the active energy ray-curable inkjet ink of the present invention on a plastic substrate exhibits high adhesion to the plastic substrate. Moreover, even though the polyester resin of the present invention is blended into the composition, the composition can maintain a low viscosity and thus, can be used as a UV inkjet ink.

Description of Embodiments

The active energy ray-curable inkjet ink composition will be hereinafter described in detail.

Active Energy Ray-Curable Inkjet Ink Composition

The active energy ray-curable inkjet ink composition of the present invention comprises a polyester resin (A). The polyester resin (A) contains a structural unit (a-1) derived from a polybasic acid and a structural unit (a-2) derived from a polyhydric alcohol. The active energy ray-curable inkjet ink composition of the present invention optionally further contains a (meth)acrylate monomer (B) and a polymerization initiator (C). When the active energy ray-curable inkjet ink composition of the present invention is used as a coloring ink, a colorant and the like are further added. When the active energy ray-curable inkjet ink composition of the present invention is used as a colorless ink (such as a varnish or for topcoat use, the colorant is not added. Various additives may be added as appropriate, according to the use.

Polyester Resin (A)

The polyester resin (A) of the present invention contains a structural unit (a-1) derived from a polybasic acid and a structural unit (a-2) derived from a polyhydric alcohol. The structural unit (a-2) derived from a polyhydric alcohol contains 20 mol% or more and 100 mol% or less of a structural unit derived from hydrogenated bisphenol A. Specifically, in the polyester resin (A), the content of the structural unit derived from hydrogenated bisphenol A is 20 mol% or more and 100 mol% or less, based on the total content of the structural unit (a-2) derived from a polyhydric alcohol. The polyester resin (A) has a number average molecular weight of 500 to 4,500 and an acid value of 5 to 300.

The polyester resin (A) contained in the active energy ray-curable inkjet ink composition of the present invention is a reaction product obtained by the reaction of a dibasic or higher polybasic acid and a divalent or higher polyhydric alcohol. The polybasic acid may be an acid anhydride thereof. A single polybasic acid may be used, or two or more polybasic acids may be used in combination.

Structural Unit (a-1) Derived from Polybasic Acid

Examples of the structural unit (a-1) derived from a polybasic acid include an unsaturated polybasic acid or a saturated polybasic acid.

The unsaturated polybasic acid is not limited, and may be a known one. Examples of the unsaturated polybasic acid include maleic anhydride, fumaric acid, citraconic acid, and itaconic acid. These unsaturated polybasic acids may be used alone or in combination.

The saturated polybasic acid is not limited, and may be a known one. Examples of the saturated polybasic acid include structural units derived from succinic acid, glutaric acid, maleic acid, maleic anhydride, chloromaleic acid, mesaconic acid, adipic acid, dodecanedioic acid, hexahydrophthalic anhydride, tetrahydrophthalic anhydride, orthophthalic acid, isophthalic acid, terephthalic acid, and the like. Among the above, structural units derived from hexahydrophthalic anhydride, tetrahydrophthalic anhydride, orthophthalic acid, isophthalic acid, and terephthalic acid are preferred, and structural units derived from hexahydrophthalic anhydride and tetrahydrophthalic anhydride are more preferred.

Structural Unit (a-2) Derived from Polyhydric Alcohol

The structural unit (a-2) derived from a polyhydric alcohol of the present invention contains at least a structural unit derived from hydrogenated bisphenol A. Hydrogenated bisphenol A may be used alone or in combination with another polyhydric alcohol. Examples of the polyhydric alcohol that may be used in combination include ethylene glycol, 1,2-propylene glycol, 1,3-propanediol, 2-methyl-1,3-propanediol, 1,2-butanediol, 1,3-butanediol, 1,4-butanediol, 1,5-pentanediol, 1,6-hexanediol, 3-methyl-1,5-pentanediol, neopentyl glycol, diethylene glycol, dipropylene glycol, triethylene glycol, 1,9-nonanediol, 2-methyloctanediol, glycerin, 1,10-decanediol, bisphenol A, bisphenol F, and hydrogenated bisphenol F.

Among the above, 1,3-butanediol, 1,4-butanediol, and dipropylene glycol are preferred.

In the structural unit (a-2) derived from a polyhydric alcohol, the content of the structural unit derived from hydrogenated bisphenol A may be in the range of 20 mol% or more to 100 mol% (for example, 20 mol% or more to 100 mol, 20 mol% or more and 95 mol% or less, 20 mol% or more and 80 mol% or less, or 20 mol% or more and 70 mol% or less), based on the total content of the structural unit derived from a polyhydric alcohol. When the content of the structural unit derived from hydrogenated bisphenol A is in the above-mentioned range, an inkjet ink composition can be obtained that achieves excellent adhesion to a plastic substrate while maintaining a low viscosity when used as an ink. Among the above-mentioned ranges, the content of the structural unit derived from hydrogenated bisphenol A in the structural unit (a-2) derived from a polyhydric alcohol is preferably 20 mol% or more and 100 mol% or less, 50 mol% or more and 100 mol% or less, 80 mol% or more and 100 mol% or less, 90 mol% or more and 100 mol% or less, 99 mol% or more and 100 mol% or less, or 100 mol%.

The number average molecular weight (Mn) of the polyester resin (A) is preferably 500 to 4,500, more preferably 800 to 3,000, and still more preferably 800 to 2,000. While the weight average molecular weight (Mw) of the polyester resin (A) is not limited, it is preferably 500 to 5,000, and more preferably 800 to 3,000. If the molecular weight is excessively low, the curability of the ink composition obtained after adding the polyester resin (A) on a plastic substrate will decrease; whereas if the molecular weight is excessively high, the ink composition obtained after adding the polyester resin (A) will have an increased viscosity, and cannot be ejected as an inkjet ink. As used herein, "number average molecular weight" and "weight average molecular weight" are each determined by measuring them at 40°C using gel permeation chromatography (Prominence-i, LC-2030 manufactured by Shimadzu Corporation), and using a standard polystyrene calibration curve. The acid value of the polyester resin (A) may be 5 to 300. The acid value is preferably 10 to 200, and more preferably 15 to 150.

The polyester resin (A) may be synthesized by a known method, using raw materials as described above. Various conditions for the synthesis need to be selected appropriately, according to the raw materials to be used and the amounts thereof. In this reaction, a catalyst may be used as required. Examples of the catalyst include known catalysts, such as manganese acetate, dibutyl tin oxide, stannous oxalate, zinc acetate, and cobalt acetate. These catalysts may be used alone or in combination. The reaction temperature is preferably in the range of 150 to 220°C, more preferably 170 to 200°C, to give an optimal reaction rate and yield.

The order of adding the raw materials to obtain the polyester resin (A) of the present invention may be adjusted appropriately, according to the polyester resin (A) having an intended structure. For example, when two polybasic acids and two polyhydric alcohols are used, the two polybasic acids and two polyhydric alcohols may be added at once and reacted. Alternatively, to obtain a polyester resin having a terminal structure different from internal structural units, the ratio of reaction composition of a polybasic acid to a single polyhydric alcohol may be adjusted to 1:2 or 2:1 in terms of molar ratio, and a first-step reaction may be conducted; thereafter, another polybasic acid or polyhydric alcohol that determines the terminal structure may be added as appropriate, and a second-step reaction may be conducted.

The reaction is preferably conducted in an inert gas atmosphere, such as nitrogen or argon. The reaction may be conducted under atmospheric pressure or under pressure, preferably under atmospheric pressure in view of ease of operation. The reaction may be conducted by charging a reactor equipped with an impeller with the raw materials all at once or in divided portions, and reacting them at the above-mentioned predetermined temperature.

The content of the polyester resin (A) in the active energy ray-curable inkjet ink composition may be in the range of 1 to 20% by weight, preferably 5 to 15% by weight. If the polyester resin (A) content is below 1%, sufficient adhesion to the substrate cannot be achieved, whereas if the content is above 20%, the viscosity will increase, and the composition cannot be ejected as an inkjet ink.

(Meth)acrylate Monomer (B)

The active energy ray-curable inkjet ink composition of the present invention optionally comprises a (meth)acrylate monomer (B).

While the (meth)acrylate monomer (B) is not limited as long as it can be ejected as an inkjet ink, the (meth)acrylate monomer (B) needs to exhibit a low viscosity. The (meth)acrylate monomer (B) may be one that exhibits a viscosity of about 5 to 20 mPa·s at 25°C, and may typically be a monofunctional or bifunctional (meth)acrylate monomer. As long as a low viscosity can be maintained, a small amount of a polyfunctional (meth)acrylate (for example, trimethylolpropane triacrylate, ditrimethylolpropane tetraacrylate, pentaerythritol triacrylate, or pentaerythritol tetraacrylate) may be optionally added.

Examples of the (meth)acrylate monomer (B) include isobornyl acrylate, 4-hydroxybutyl acrylate, lauryl acrylate, 2-methoxyethyl acrylate, phenoxyethyl acrylate, isooctyl acrylate, stearyl acrylate, cyclohexyl acrylate, 2-ethoxyethyl acrylate, benzyl acrylate, 1H,1H,5H-octafluoropentyl acrylate, 2-hydroxyethyl acrylate, 2-hydroxypropyl acrylate, isobutyl acrylate, tert-butyl acrylate, tetrahydrofurfuryl acrylate, ethylcarbitol acrylate, 2,2,2-trifluoroethyl acrylate, 2,2,3,3-tetrafluoropropyl acrylate, methoxytriethylene glycol acrylate, propylene oxide (PO)-modified nonylphenol acrylate, ethylene oxide (EO)-modified nonylphenol acrylate, ethylene oxide (EO)-modified 2-ethylhexyl acrylate, phenyl glycidyl ether acrylate, phenoxydiethylene glycol acrylate, ethylene oxide (EO)-modified phenol acrylate, ethylene oxide (EO)-modified cresol acrylate, methoxypolyethylene glycol acrylate, dipropylene glycol acrylate, dicyclopentenyl acrylate, dicyclopentenyloxyethyl acrylate, 2-n-butyl-2-ethyl-1,3-propanediol diacrylate, tripropylene glycol diacrylate, tetraethylene glycol diacrylate, 1,9-nonanediol diacrylate, 1,4-butanediol diacrylate, bisphenol A ethylene oxide (EO)-modified diacrylate, 1,6-hexanediol diacrylate, polyethylene glycol 200 diacrylate, neopentylglycol hydroxypivalate diacrylate, 2-ethyl-2-butyl-propanediol diacrylate, polypropylene glycol diacrylate, propylene oxide (PO)-modified bisphenol A diacrylate, ethylene oxide (EO)-modified hydrogenated bisphenol A diacrylate, dipropylene glycol diacrylate, polypropylene glycol diacrylate, trimethylolpropane triacrylate, pentaerythritol triacrylate, γ-butyrolactone acrylate, pentamethyl piperidyl acrylate, tetramethyl piperidyl acrylate, 2-methyl-2-adamantyl acrylate, 2-ethyl-2-adamantyl acrylate, mevalonic acid lactone acrylate, dimethyloltricyclodecane diacrylate, 2-(2-vinyloxyethoxy)ethyl acrylate, 1-adamantyl methyl acrylate, 1-adamantyl acrylate, 2-acryloyloxyethyl phthalate, isobornyl acrylate, 3-acryloyloxypropyl acrylate, dicyclopentanyl acrylate, 2-hydroxy 3-phenoxypropyl acrylate, diethylene glycol diethyl ether, N-vinylcaprolactam, and N-vinylpyrrolidone. Among the above, isobornyl acrylate, phenoxyethyl acrylate, 1,6-hexanediol diacrylate, 1,9-nonanediol diacrylate, and dipropylene glycol diacrylate are preferred.

The (meth)acrylate monomer (B) is preferably a monofunctional (meth)acrylate having a homopolymer glass transition temperature of -5 to -20°C, in order to improve the cross-cut resistance. More specifically, the polymerizable monomer component (A) preferably contains 6 to 50% by weight of a monofunctional (meth)acrylate having a homopolymer glass transition temperature of -5 to -20°C and 50 to 94% by weight of a (meth)acrylate monomer different from the monofunctional (meth)acrylate, and more preferably contains 15 to 45% by weight of a monofunctional (meth)acrylate having a homopolymer glass transition temperature of -5 to -20°C and 55 to 85% by weight of a (meth)acrylate monomer different from the monofunctional (meth)acrylate.

Examples of the monofunctional (meth)acrylate having a homopolymer glass transition temperature of -5 to -20°C include 2-ethylhexyl methacrylate (-10°C), 2-hydroxyl acrylate (-10°C), 2-hydroxyethyl acrylate (-15°C), 2-hydroxypropyl acrylate (-7°C), phenoxyethyl acrylate (-20°C), phenoxydiethylene glycol acrylate (-15°C), phenoxypolyethylene glycol acrylate (-20°C), methoxypolyethylene glycol methacrylate (-10°C), tetrahydrofurfuryl acrylate (-15°C), ethoxylated nonylphenol acrylate (-20°C), and alkoxylated phenol acrylate (-20°C). Phenoxydiethylene glycol acrylate and/or tetrahydrofurfuryl acrylate are/is preferred. Each value in parentheses indicates the glass transition temperature of the homopolymer.

These monofunctional (meth)acrylates may be used alone or in combination. When two or more monofunctional (meth)acrylates are used in combination, the ratio between them is not limited. For example, when two monofunctional (meth)acrylates are used in combination, the ratio of one monofunctional (meth)acrylate to the other monofunctional (meth)acrylate may be in the range of 5:95 to 95:5, preferably 20:80 to 80:20.

The content of the (meth)acrylate monomer (B) in the active energy ray-curable inkjet ink composition may be in the range of 50 to 1500 parts by weight, more preferably 50 to 1300 parts by weight, and particularly preferably 50 to 1200 parts by weight, per 100 parts by weight of the polyester resin (A).

Polymerization Initiator (C)

The active energy ray-curable inkjet ink composition of the present invention optionally comprises a polymerization initiator. In the present invention, a polymerization initiator can be used without limitation. In particular, the composition of the present invention preferably contains a photopolymerization initiator.

The amount of the polymerization initiator blended in the active energy ray-curable inkjet ink composition of the present invention is preferably in the range of 0.1 to 20 parts by weight, more preferably 1 to 15 parts by weight, and particularly preferably 5 to 10 parts by weight, based on the total amount of the (meth)acrylate monomer (B) and the polyester resin (A) taken as 100 parts by weight.

Examples of photopolymerization initiators include, but are not limited to, benzoins and benzoin alkyl ethers, such as benzyl, benzoin methyl ether, benzoin ethyl ether, benzoin n-propyl ether, benzoin isopropyl ether, and benzoin n-butyl ether; benzophenones, such as benzophenone, p-methylbenzophenone, Michler's ketone, methylbenzophenone, 4,4'-dichlorobenzophenone, and 4,4'-bisdiethylaminobenzophenone; acetophenones, such as acetophenone, 2,2-dimethoxy-2-phenylacetophenone, 2,2-diethoxy-2-phenylacetophenone, 1,1-dichloroacetophenone, 1-hydroxy-cyclohexyl-phenyl ketone, 2-methyl-1-[4-(methylthio)phenyl]-2-morpholino-1-propanone, 2-benzyl-2-dimethylamino-1-(4-morpholinophenyl)-butanone-1, and N,N-dimethylaminoacetophenone; thioxanthones, such as 2,4-dimethylthioxanthone, 2,4-diethylthioxanthone, 2-chlorothioxanthone, and 2,4-diisopropylthioxanthone; anthraquinones, such as anthraquinone, chloroanthraquinone, 2-methylanthraquinone, 2-ethylanthraquinone, 2-tert-butylanthraquinone, 1-chloroanthraquinone, 2-amylanthraquinone, and 2-aminoanthraquinone; ketals, such as acetophenone dimethyl ketal and benzyl dimethyl ketal; oxime esters, such as 1.2-octanedione, 1-[4-(phenylthio)-, 2-(O-benzoyloxime)], and ethanone, 1-[9-ethyl-6-(2-methylbenzoyl)-9H-carbazol-3-yl]-, 1-(O-acetyloxime); acylphosphines, such as 2,4,6-trimethylbenzoyl diphenyl phosphine oxide and bis(2,4,6-trimethylbenzoyl)-phenylphosphine oxide; phenyldisulfide 2-nitrofluorene, butyroin, anisoisoethyl ether, and azobisisobutyronitrile. Among the above, acetophenones, alkylphenones, acylphosphine oxides, oxyphenyls, oxime esters, and benzoins are preferred, and acetophenones and alkylphenones are more preferred. These photopolymerization initiators may be used alone or in combination. The photopolymerization initiator can also be used in combination with a sensitizer.

Examples of sensitizers include anthracene, phenothiazine, perylene, thioxanthone, and benzophenone thioxanthone.

The active energy ray to be used for curing the active energy ray-curable inkjet ink composition of the present invention is not limited, and may be any that can apply the energy required to cause the polymerization reaction of the polymerizable component (for example, the (meth)acrylate monomer) in the composition to proceed, for example, ultraviolet ray, electron beam, $\alpha$ ray, $\beta$ ray, $\gamma$ ray, and X-ray. In particular, when a high-energy light source is used, the polymerization reaction can proceed without a polymerization initiator. In the case of ultraviolet irradiation, mercury-free ultraviolet irradiation is strongly desired in view of environmental protection, and the replacement with a GaN-based semiconductor ultraviolet light-emitting device is industrially and environmentally very useful. In particular, an ultraviolet light-emitting diode (UV-LED) and an ultraviolet laser diode (UV-LD), which have a small size, a long life, high efficiency, and a low cost, are preferred ultraviolet light sources.

The active energy ray-curable inkjet ink composition of the present invention may contain various additives according to the purpose. Examples of the additives include stabilizers (for example, polymerization inhibitors, such as hydroquinone, methoquinone, and methylhydroquinone), colorants, such as pigments (for example, cyanine blue, disazo yellow, carmine 6b, lake red C, carbon black, and titanium white), fillers, and viscosity modifiers.

Preparation of Active Energy Ray-Curable Inkjet Ink Composition

The active energy ray-curable inkjet ink composition of the present invention may be prepared using the various components described above, and the means or conditions for the preparation are not limited. For example, the active energy ray-curable inkjet ink composition of the present invention may be prepared by placing a pigment, a dispersant, and the like in a dispersion machine, such as a ball mill, a key mill, a disc mill, a pin mill, or a dyno-mill, and dispersing them to prepare a pigment dispersion, and further mixing a (meth)acrylate monomer, a polymerization initiator, a polymerization inhibitor, a surfactant, and the like into the pigment dispersion.

The viscosity of the active energy ray-curable inkjet ink composition of the present invention may be adjusted appropriately according to the use or application means, and is not limited. For example, when an ejection means for ejecting the composition from a nozzle is applied, the viscosity at a temperature in the range of 20 to 65°C, preferably at 25°C, is 1 mPa·s or more and 20 mPa·s or less, preferably 5 mPa·s or more and 15 mPa·s or less. An organic solvent or the like may be added to adjust the viscosity in the above-mentioned range. The viscosity may be measured using a MARS III rheometer manufactured by Thermo Scientific. The rheometer is set appropriately such that the rotation speed is 10 rpm, and the temperature of the constant-temperature circulating water is in the range of 20 to 65°C.

Uses

The active energy ray-curable inkjet ink composition of the present invention is used without limitation in any fields in which active energy ray-curable materials are generally used, and the use thereof may be selected appropriately according to the purpose. Examples of uses include resins for molding, paints, adhesives, insulating materials, mold release agents, coating materials, sealing materials, various resists, and various optical materials.

The active energy ray-curable inkjet ink composition of the present invention may also be used not only as an ink to form two-dimensional letters or images, or design coating films on various substrates, but also as a material for three-dimensional modeling to form three-dimensional images (three-dimensional modeling articles).

The apparatus for fabricating a three-dimensional modeling article using the active energy ray-curable inkjet ink composition of the present invention may be a known one, and is not limited. Examples of the apparatus include an apparatus equipped with a housing means, a feed means, an ejection means, and an active energy ray irradiation means for the composition, for example.

The present invention also includes a cured product obtained by curing the active energy ray-curable inkjet ink composition and a molded article obtained by processing a structure on which the cured product is formed on a substrate. Examples of the molded article include a molded article obtained by molding, for example, heat drawing or punching, the cured product or structure formed into a sheet or a film. Such molded articles are suitably used as, for example, panels of operating units or meters for automobiles, OA equipment, electrical and electronic equipment, cameras, and the like, i.e., for applications in which the articles need to be molded after their surface is decorated.

The substrate is not limited, and may be selected appropriately according to the purpose. Examples of the substrate include paper, yarns, fibers, fabrics, leathers, metals, plastics, glass, wood, ceramics, and composite materials thereof. In view of processability, plastic substrates (for example, polypropylene (PP), polyethylene (PE), polycarbonate (PC), polyvinyl chloride (PVC), and polyethylene terephthalate (PET)) are preferred.

The present invention will be hereinafter described in more detail with reference to examples; however, the present invention is in no way limited to the examples.

The materials used in the following examples and comparative examples will be hereinafter described.

Polyester Resins

Polyester resins were synthesized in the below-described polymerization examples, using the materials given below:

Tetrahydrophthalic anhydride (hereinafter THPA; RIKACID TH manufactured by New Japan Chemical Co., Ltd.) Hydrogenated bisphenol A (hereinafter HBPA; manufactured by TCI) 1,3-Butanediol (hereinafter BG; manufactured by Wako Pure Chemical)

Polymerization Example 1: Synthesis of Polyester Resin 1

In a 500 ml cylindrical round bottom flask, 154 g of THPA was placed, and heated to 100°C and melted. The temperature was elevated to 150°C, and under 200 ml of nitrogen/min and rotation at 100 rpm, 192 g of the HBPA powder was placed in four divided portions. After the dissolution of the powder was visually confirmed, the heater temperature was elevated to 200°C, and distillation of water was awaited under rotation at 150 rpm; after dropping of the liquid was confirmed, a total of 20 g of THPA was added and the mixture was reacted while the product was sampled at 30-minute intervals to measure the number average molecular weight and the acid value. The reaction was stopped when an intended number average molecular weight and an intended acid value were achieved. This gave 301 g of a polyester resin 1 having a number average molecular weight of 1280, an acid value of 140, and an HBPA content of 100 mol% in the polyhydric alcohol. The polyester resin 1 was used in Examples 1 and 6 to 8.

Polymerization Example 2: Synthesis of Polyester Resin 2

In a 500 ml cylindrical round bottom flask, 92 g of THPA was placed, and heated to 100°C and melted. The temperature was elevated to 150°C, and under 200 ml of nitrogen/min and rotation at 100 rpm, 120 g of the HBPA powder was placed in four divided portions. After the dissolution of the powder was visually confirmed, the heater temperature was elevated to 200°C, and distillation of water was awaited under rotation at 150 rpm; after dropping of the liquid was confirmed, a total of 100 g of HBPA was added and the mixture was reacted while the product was sampled at 30-minute intervals to measure the number average molecular weight and the acid value. The reaction was stopped when an intended number average molecular weight and an intended acid value were achieved. This gave 270 g of a polyester resin 2 having a number average molecular weight of 800, an acid value of 23, and an HBPA content of 100 mol% in the polyhydric alcohol. The polyester resin 2 was used in Example 2.

Polymerization Example 3: Synthesis of Polyester Resin 3

In a 500 ml cylindrical round bottom flask, 280 g of THPA was placed, and heated to 100°C and melted. The temperature was elevated to 150°C, and under 200 ml of nitrogen/min and rotation at 100 rpm, 80 g of BG was placed. After the dissolution was visually confirmed, the heater temperature was elevated to 200 °C, and distillation of water was awaited under rotation at 150 rpm; after dropping of the liquid was confirmed, a total of 70 g of HBPA was added and the mixture was reacted while the product was sampled at 30-minute intervals to measure the number average molecular weight and the acid value. The reaction was stopped when an intended number average molecular weight and an intended acid value were achieved. This gave 260 g of a polyester resin 3 having a number average molecular weight of 1020, an acid value of 130, and an HBPA content of 25 mol% in the polyhydric alcohols. The polyester resin 3 was used in Example 3.

Polymerization Example 4: Synthesis of Polyester Resin 4

In a 500 ml cylindrical round bottom flask, 150 g of THPA was placed, and heated to 100°C and melted. The temperature was elevated to 150°C, and under 200 ml of nitrogen/min and rotation at 100 rpm, 70 g of BG was placed. After the dissolution was visually confirmed, the heater temperature was elevated to 200°C, and distillation of water was awaited under rotation at 150 rpm; after dropping of the liquid was confirmed, a total of 90 g of HBPA was added and the mixture was reacted while the product was sampled at 30-minute intervals to measure the number average molecular weight and the acid value. The reaction was stopped when an intended number average molecular weight and an intended acid value were achieved. This gave 202 g of a polyester resin 4 having a number average molecular weight of 1250, an acid value of 32, and an HBPA content of 20 mol% in the polyhydric alcohols. The polyester resin 4 was used in Example 4.

Polymerization Example 5: Synthesis of Polyester Resin 5

In a 500 ml cylindrical round bottom flask, 230 g of THPA was placed, and heated to 100°C and melted. The temperature was elevated to 150°C, and under 200 ml of nitrogen/min and rotation at 100 rpm, 135 g of BG was placed. After the dissolution was visually confirmed, the heater temperature was elevated to 200°C, and distillation of water was awaited under rotation at 150 rpm; after dropping of the liquid was confirmed, a total of 70 g of HBPA was added and the mixture was reacted while the product was sampled at 30-minute intervals to measure the number average molecular weight and the acid value. The reaction was stopped when an intended number average molecular weight and an intended acid value were achieved. This gave 254 g of a polyester resin 5 having a number average molecular weight of 1050, an acid value of 34, and an HBPA content of 16 mol% in the polyhydric alcohols. The polyester resin 5 was used in Comparative Example 2.

Preparation of Polyester Resin 6

50 g of each of the polyester resin 1 and the polyester resin 2 obtained above was weighed out and mixed to prepare a polyester resin 6. The polyester resin 6 was used in Example 5.

For a comparative example, ELITEL UE3350 (comparative polyester resin) manufactured by UNITIKA was used.

Physical property values of each of the polyester resins synthesized were measured using the following methods.

(1) GPC Measurement Conditions

The number average molecular weight and the weight average molecular weight were measured by the GPC technique under the following conditions, using a standard polystyrene calibration curve. The results are shown in Tables 1 and 3.

Apparatus: Prominence-i, LC-2030 manufactured by Shimadzu Corporation
Column: Shodex LF-804 × 2, Guard column S
Mobile phase: THF
Flow rate: 1.0 ml/min
Injection volume: 50 μl
Column temperature: 40°C

(2) Measurement of Acid Value

1.5 g of each of the polyester resins synthesized was weighed out into an Erlenmeyer flask, and dissolved in about 10 ml of a solvent (toluene/methanol = 7/3 (volume ratio)) added thereto. Then, three drops of an indicator (1% phenolphthalein/ethyl alcohol solution) were added and the solution was titrated with 0.1 N potassium hydroxide solution, until the end point at which the solution color changed from white to pink, and the acid value was calculated based on the following equation. The results are shown in Tables 1 and 3.

$$\text{Acid value (mg KOH/g)} = A \times F/S,$$

where

F: factor of 0.1 N potassium hydroxide solution (f × 5.61), f = 1,
V: titration volume (ml) of 0.1 N potassium hydroxide solution, and
W: sample weight (g).

To evaluate the polyester resins as active energy ray-curable inkjet ink compositions, varnish compositions were prepared by preparing a mixture of 90 parts by weight of dipropylene glycol diacrylate as a (meth)acrylate monomer and 10 parts by weight of 1-hydroxy-cyclohexyl-phenyl-ketone (Irgacure 184 manufactured by IGM Resins B.V.) as a photopolymerization initiator, and dissolving 10 parts by weight of the polyester resins 1 to 6 in the mixture, and these compositions were used for evaluation. The polyester resins were each dissolved by placing the mixture in a container equipped with a disper, and stirring with heating to 40°C until the mixture turned transparent when visually observed.

Various physical properties of the varnish compositions were measured in accordance with the following methods.

(1) Viscosity

The viscosity at 25°C of each varnish composition was measured using a MARS III rheometer manufactured by Thermo Scientific. The cone-plate angle was 2°C, and the viscosity was read at 10 rpm. The results are shown in Tables 2 and 4.

(2) Tape Peel Test

A 6 ± 1 $\mu$m coating film was prepared using a bar coater on a polypropylene substrate (P2161 manufactured by Toyobo, biaxially stretched polypropylene, corona-treated), and the coating film was irradiated with a metal halide light source at 200 mJ/cm$^2$ to prepare a UV-cured coating film. Cellophane tape manufactured by NICHIBAN was applied to the coating film and rubbed strongly with a finger, and then peeled. The condition of the coating film was evaluated on a scale of 1 to 5 as follows. The results are shown in Tables 2 and 4.

    5: Not peeled when rapidly peeled.

    4: 50% peeled when rapidly peeled; the substrate peeled although not drawn by the tape.

    3: Completely peeled when rapidly peeled, although not peeled when slowly peeled.

    2: 50% peeled when slowly peeled.

    1: Completely peeled when slowly peeled.

(3) Cross-Cut Adhesion Resistance Test

A 6 ± 1 $\mu$m coating film was prepared using a bar coater on a polypropylene substrate (P2161 manufactured by Toyobo Co., Ltd., biaxially stretched polypropylene, corona-treated), and the coating film was irradiated with a metal halide light source at 200 mJ/cm$^2$ to prepare a UV-cured coating film. In accordance with ASTM D3359, square-shaped cuts were made with a cross-cutter in the coating film, after which cellophane tape manufactured by NICHIBAN was applied to the coating film and rubbed strongly with a finger, and then peeled. Out of 25 squares, the number of the squares remaining on the substrate was counted. The results are shown in Tables 2 and 4.

[Table 1]

|  | Comp. Ex. 1 | Ex. 1 | Ex. 2 | Ex. 3 | Ex. 4 | Comp. Ex. 2 | Ex. 5 |
|---|---|---|---|---|---|---|---|
| Comparative Polyester Resin | 10 |  |  |  |  |  |  |
| Polyester Resin 1 |  | 10 |  |  |  |  |  |
| Polyester Resin 2 |  |  | 10 |  |  |  |  |
| Polyester Resin 3 |  |  |  | 10 |  |  |  |
| Polyester Resin 4 |  |  |  |  | 10 |  |  |
| Polyester Resin 5 |  |  |  |  |  | 10 |  |
| Polyester Resin 6 |  |  |  |  |  |  | 10 |
| Dipropylene Glycol Diacrylate | 90 | 90 | 90 | 90 | 90 | 90 | 90 |
| Irgacure184 | 10 | 10 | 10 | 10 | 10 | 10 | 10 |
| Number Average Molecular Weight (Mn) | 5,000 | 1,280 | 850 | 1,020 | 1,250 | 1,050 | 1,010 |
| Acid Value | 1 | 140 | 23 | 130 | 32 | 34 | 86 |
| HBPA Content (mol%) in Polyhydric Alcohol(s) | 0 | 100 | 100 | 25 | 20 | 16 | 100 |

[Table 2]

|  | Comp. Ex. 1 | Ex. 1 | Ex. 2 | Ex. 3 | Ex. 4 | Comp. Ex. 2 | Ex. 5 |
|---|---|---|---|---|---|---|---|
| Viscosity (mPa·s) at 25°C | 35 | 15 | 15 | 15 | 15 | 15 | 15 |
| Tape Peel Test | 2 | 5 | 5 | 5 | 5 | 3 | 5 |
| Results of Cross-Cut Resistance Test | 0 | 14 | 10 | 11 | 14 | 7 | 10 |

The composition of Comparative Example 1, in which a commercially available polyester resin was used, had a viscosity at 25°C of 35 mPa·s, which was inappropriately high as an inkjet ink. This is believed to be due to the excessively high molecular weight of the resin.

Examples 1 and 2 show that when the resins in which the HBPA content in the polyhydric alcohol is 100 mol% have an acid value of 20 to 140, high adhesion to the polypropylene substrate can be achieved while maintaining a low viscosity (15 mPa·s).

Examples 1 and 3 show that when the HBPA content is in the range of 25 to 100 mol% in the structural unit(s) derived from polyhydric alcohol(s) in the polyester resins with high acid values, high adhesion to the polypropylene substrate can be achieved while maintaining a low viscosity.

Examples 2 and 4 show that when the HBPA content is in the range of 20 to 100 mol% in the structural unit(s) derived from polyhydric alcohol(s) in the polyester resins with low acid values, high adhesion to the polypropylene substrate can be achieved while maintaining a low viscosity.

Comparative Example 2 shows that when the HBPA content is 16 mol% in the structural units derived from polyhydric alcohols in the polyester resin, adhesion to the polypropylene substrate cannot be achieved although a low viscosity is maintained.

Example 5 shows that similar results are achieved using a blend of two resins, i.e., the polyester resin 1 and the polyester resin 2.

[Table 3]

|  | Ex. 6 | Ex. 7 | Ex. 8 | Comp. Ex. 3 | Comp. Ex. 4 |
|---|---|---|---|---|---|
| Polyester Resin 1 | 10 | 10 | 10 |  |  |
| Dipropylene Glycol Diacrylate | 50 | 50 | 50 | 50 | 50 |
| Diethylene Glycol Monoethyl Ether Acrylate | 20 | 10 | 10 | 20 | 20 |
| Phenoxydiethylene Glycol Acrylate | 20 | 25 | 25 |  | 20 |
| Tetrahydrofurfuryl Acrylate | 10 | 15 | 15 |  | 10 |
| Irgacure184 | 5 | 5 | 5 | 5 | 5 |
| Number Average Molecular Weight (Mn) | 1,280 | 1,280 | 1,280 |  |  |
| Acid Value | 140 | 140 | 140 |  |  |
| HBPA Content (mol%) in Polyhydric Alcohol(s) | 100 | 100 | 100 |  |  |

Table 3 shows the compositions of the varnish compositions used in Examples 6 to 8 and Comparative Examples 3 and 4. In the table, the values of the compositions are shown in part(s) by weight.

Dipropylene glycol diacrylate; APG-100 manufactured by Shin-Nakamura Chemical Co., Ltd., homopolymer glass transition temperature 110°C

Diethylene glycol monoethyl ether acrylate; LIGHT ACRYLATE EC-A manufactured by KYOEISHA CHEMICAL Co., LTD., homopolymer glass transition temperature -70°C

Phenoxydiethylene glycol acrylate; LIGHT ACRYLATE P2H-A manufactured by KYOEISHA CHEMICAL Co., LTD., glass transition temperature -15°C

Tetrahydrofurfuryl acrylate; THF-A manufactured by KYOEISHA CHEMICAL Co., LTD., homopolymer glass transition temperature -15°C

[Table 4]

|  | Ex. 6 | Ex. 7 | Ex. 8 | Comp. Ex. 3 | Comp. Ex. 4 |
|---|---|---|---|---|---|
| Viscosity (mPa·s) at 25°C | 15 | 16 | 15 | 9 | 8 |
| Tape Peel Test | 5 | 5 | 2 | 2 | 2 |
| Results of Cross-Cut Resistance Test | 22 | 20 | 20 | 0 | 5 |

Table 4 shows the measurement results of the varnish compositions.

The composition of Comparative Example 3, which did not contain the specific polymerizable monomer components and the resin component, had poor adhesion to the substrate, and did not exhibit cross-cut resistance. The composition of Comparative Example 4, which contained the specific polymerizable monomer components, but did not contain the resin component, had poor adhesion to the substrate, and had low cross-cut resistance.

The compositions of Examples 6 to 8, which contained the specific polymerizable monomer components and the resin component, achieved adhesion to the substrate, and exhibited high cross-cut resistance because the coating films had appropriate flexibility.

Industrial Applicability

The active energy ray-curable inkjet ink composition of the present invention can be used as various inks, coating materials, paints, and the like, as an inkjet ink.

**Claims**

1.   An active energy ray-curable inkjet ink composition comprising a polyester resin (A), wherein
the polyester resin (A) contains a structural unit (a-1) derived from a polybasic acid and a structural unit (a-2) derived from a polyhydric alcohol,
the structural unit (a-2) derived from a polyhydric alcohol contains 20 mol% or more and 100 mol% or less of a structural unit derived from hydrogenated bisphenol A, and
the polyester resin (A) has a number average molecular weight (Mn) of 500 to 4,500 and an acid value of 5 to 300.

2.   The active energy ray-curable inkjet ink composition according to claim 1, further comprising a (meth)acrylate monomer (B).

3.   The active energy ray-curable inkjet ink composition according to claim 1 or 2, further comprising a polymerization initiator (C).

4.   The active energy ray-curable inkjet ink composition according to any one of claims 1 to 3, wherein the composition has a viscosity of 5 to 20 mPa·s.

5.   A print obtained by printing the active energy ray-curable inkjet ink composition according to any one of claims 1 to 4, and irradiating the composition with an active energy ray.

## INTERNATIONAL SEARCH REPORT

| International application No. |
|---|
| PCT/JP2019/007419 |

| A. CLASSIFICATION OF SUBJECT MATTER |
|---|
| Int.Cl. C09D11/30(2014.01)i, B41J2/01(2006.01)i, B41M5/00(2006.01)i |
| According to International Patent Classification (IPC) or to both national classification and IPC |

| B. FIELDS SEARCHED |
|---|
| Minimum documentation searched (classification system followed by classification symbols) |
| Int.Cl. C09D11/30, B41J2/01, B41M5/00 |

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)
CAplus/REGISTRY (STN)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2010-235914 A (TOYO INK MANUFACTURING CO., LTD.) 21 October 2010, claims, paragraphs [0025]-[0028], [0055], example 21 & US 2010/0233448 A1 (claims, paragraphs [0034]-[0037], [0070], example 21) & EP 2228416 A1 & CN 101831214 A | 1-5 |
| Y | JP 2015-98552 A (KAO CORP.) 28 May 2015, claims, paragraphs [0037]-[0041], example 1 (Family: none) | 1-5 |
| A | JP 2015-52046 A (DIC CORPORATION) 19 March 2015 (Family: none) | 1-5 |
| A | JP 2012-67151 A (JNC CORPORATION) 05 April 2012 & KR 10-2012-0030962 A & TW 201213452 A | 1-5 |
| A | JP 2012-149228 A (SEIKO EPSON CORP.) 09 August 2012 & US 2012/0225968 A1 | 1-5 |
| A | JP 2016-069579 A (FUJIFILM CORP.) 09 May 2016 & US 2016/0090497 A1 & EP 3002319 A1 & CN 105462362 A | 1-5 |
| A | JP 2017-25263 A (KAO CORP.) 02 February 2017 (Family: none) | 1-5 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 May 2019 (13.05.2019) | 21 May 2019 (21.05.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5540862 B

- JP 2017019989 A